# EUROPÄISCHE PATENTSCHRIFT

(11) **EP 1 984 197 B1**
(45) Veröffentlichungstag und Bekanntmachung des Hinweises auf die Patenterteilung: **11.04.2012**
(21) Anmeldenummer: 07711174.8
(22) Anmeldetag: 08.02.2007
(51) Int. Cl.: B60J 7/06

(54) **FAHRZEUGDACH**
VEHICLE ROOF
TOIT DE VÉHICULE

(30) Priorität: 17.02.2006 DE 102006007815
(43) Veröffentlichungstag der Anmeldung: 29.10.2008
(73) Patentinhaber: Webasto AG, 82131 Stockdorf (DE)
(72) Erfinder: REIHL, Peter, 82319 Starnberg (DE); DINTNER, Thomas, 80995 München (DE); WAGNER, Adam, 82110 Germering (DE); FILSINGER, Reinhard, 73207 Plochingen (DE); KRAUS, Stephan, 82152 Krailling (DE)
(74) Vertreter: Grünberg, Thomas
(86) Internationale Anmeldenummer: PCT/DE2007/000254
(87) Internationale Veröffentlichungsnummer: WO 2007/093155

(56) Entgegenhaltungen:
- EP-A2- 0 353 695
- EP-A2- 0 591 644
- WO-A-03/086798
- DE-A1- 3 925 150
- DE-A1- 4 009 470
- DE-A1- 10 138 370
- DE-A1- 10 320 538
- DE-A1-102004 020 757
- FR-A1- 2 766 429
- US-A- 3 720 440
- US-A- 5 944 378

## Beschreibung

Die vorliegende Erfindung bezieht sich auf die Konstruktion öffnungsfähiger Fahrzeugdächer, insbesondere für zu offenen Fahrzeugen (Cabriolets) konvertierbaren.Personenkraftfahrzeugen. Auf diesem Gebiet sind vielfältige Konstruktionen allgemein bekannt, die ein teilweises oder vollständiges Öffnen des Fahrzeugdachs erlauben.

Im Kontext der vorliegenden Erfindung ist unter dem Öffnen eines Fahrzeugdachs grundsätzlich die weitgehende Freigabe einer dachseitigen Öffnung zu verstehen, die sich üblicherweise zwischen den Seitenlängsträgern (Seitenholmen) des Dachs bzw. den Seitenscheiben und einem Bereich zwischen Frontscheibe und Heck erstreckt. Diese Fahrzeugdächer weisen in geöffnetem Zustand eine Öffnung auf, die über die durch ein konventionelles (beispielsweise in dem Deutschen Patent DE 37 15 268 C2 beschriebenes) Fahrzeugschiebedach freigebbare Öffnung erheblich hinausgeht.

Aus der US-Patentschrift US 6,830,284 ist ein dreiteiliges Dach bekannt, dessen steife Dachteile zur Freigabe der Dachöffnung zunächst zueinander verschoben und anschließend gemeinsam in einem Heckraum abgelegt werden.

Aus der US-Patentschrift US 6,305,734 geht ein Faltdach hervor, das zunächst in eine Halboffenstellung verschiebbar ist, wobei es rückwärtig Falten wirft. Aus der Halboffenstellung kann das Faltdach dann in eine vollgeöffnete Stellung verschoben und anschließend im Fahrzeugheck verstaut werden.

Die Deutsche Patentanmeldung DE 197 31 330 A1 beschreibt ein Fahrzeugverdeck, wobei ein hinterer Dachrahmen über eine Gelenkverbindung schwenkbar angelenkt ist. Zwischen dem hinteren Dachrahmen und dem Windschutzquerträger sind Seitenholme angeordnet, in denen ein Schiebefaltbezug gerührt und in Fahrzeuglängsrichtung verschiebbar ist. Nach dem vollständigen Öffnen des Schiebefaltbezugs kann dieser über Gelenkstangen in einen fahrzeugheckseitigen Stauraum verschwenkt werden; anschlie-βend können die Seitenholme mittels im Bereich der B-Säulen angeordneter Scharniere zur vollständigen Freigabe des mittleren Dachbereichs verschwenkt werden.

Die Erfindung bezieht sich auf ein Fahrzeugdach nach dem Oberbegriff des Patentanspruchs 1.

Aus der Druckschrift DE 103 20 538 A1 ist ein gattungsgemäß ausgebildetes Fahrzeugdach bekannt. Dieses Fahrzeugdach umfasst eine Dachöffnung und eine aus Dachsegmenten gebildete Dachbahn mit einer Dachspitze und einen Dachende. Die Dachbahn ist in beidseits der Dachöffnung angeordneten Führungsbahnen geführt und zwischen einer die Dachöffnung überdeckenden Schließstellung und einer die Dachöffnung zumindest teilweise freigebenden Öffnungsstellung verstellbar, Zu Beginn der Öffnungsbewegung wird zunächst das heckseitig angeordnete Dachelement abgesenkt

Ferner ist aus der DE 101 04 523 C1 ein Fahrzeugdach bekannt, bei dem eine als öffnungsfähiges Dachelement bezeichnete Dachbahn vorgesehen ist, die aus einer das Fahrzeugdach (bzw. eine in dem Fahrzeugdach vorgesehene Dachöffnung) vollständig abdeckenden und verschließenden Stellung (nachfolgend: Geschlossenposition) nach hinten in eine Dachkassette zusammenschiebbar ist. Dabei gibt die Dachbahn die Dachöffnung sukzessive bis zur völligen Öffnung frei (dieser Zustand wird nachfolgend auch als Öffnungsposition bezeichnet). Die Dachkassette ist um eine in Bezug auf die Fahrzeuglängsrichtung querliegende Achse nach hinten unten verschwenkbar, um sie in einem fahrzeugheckseitigen Raum zu verstauen. Die Dachbahn bewegt sich im Wesentlichen parallel zur Fläche der Dachöffnung entlang seitlicher, in Seitenholmen vorgesehener Führungsschienen. Nach vollständiger Öffnung des Dachs in Art eines Cabrios und Ablage der Dachbahn in der Dachkassette können auch die Seitenholme zumindest im Abschnitt über den vorderen Fahrzeugsitzen manuell entnommen und im Fahrzeug verstaut werden. Alternativ können die Seitenholme mittels eines entsprechenden Viergelenks so mit dem Fahrzeug verbunden sein, dass sie verschwenkbar sind und auf der Fahrzeuggürtellinie oder darunter seitlich der Rücksitze zu liegen kommen.

Die Aufgabe der vorliegenden Erfindung besteht vor diesem Hintergrund darin, ein Fahrzeugdach der zuvor beschriebenen Art dahingehend weiter zu optimieren, dass es insbesondere auch bei einer (geringen) teilgeöffneten Position während der Fahrt und bei der Öffnungsbewegung während der Fahrt keine oder nur sehr geringe Fahrtgeräusche (so genannte Wind- oder Wummergeräusche) verursacht und hinsichtlich, der Abdichtung in der Geschlossenposition bei konstruktiv einfachem Aufbau höchsten Anforderungen gerecht wird.

Diese Aufgabe wird erfindungsgemäß gelöst durch ein Fahrzeugdach mit den Merkmalen des Patentanspruchs 1.

Demgemäß ist ein Fahrzeugdach vorgesehen, mit einer Dachöffnung und mit einer Dachbahn mit einer zur Fahrzeugfront weisenden Dachspitze und einem zum Fahrzeugheck weisenden Dachende, die entlang beiderseits der Dachöffnung verlaufender Führungsbahnen aus einer die Dachöffnung verschließenden Geschlossenposition in eine die Dachöffnung zumindest teilweise freigebende Öffnungsposition bewegbar ist, wobei die Öffnungsbewegung aus der Geschlossenposition der Dachbahn, mit einer Bewegung des Dachendes in eine abgesenkte Position unterhalb der Dachöffnung beginnt.

Ein wesentlicher Aspekt der Erfindung besteht darin, dass sich der heckseitige Bereich der Dachbahn zu Beginn des Öffnungsvorganges aus der Geschlossenposition in Bezug auf die Dachöffnung nach unten in eine (weiter) abgesenkte Position unterhalb der Dachöffnung bewegt, bevor die Dachbahn die translatorische Öffnungsbewegung zum Fahrzeugheck hin vollführt. In dieser (für die Öffnungsbewegung als Initialöffnung anzusehenden Position) gibt das Dachende gegenüber dem heckseitigen Dachbereich einen je nach Bedarf festlegbaren, im Wesentlichen vertikalen Öffnungsspalt frei. Damit wird in vorteilhafter Weise eine betriebsgemäß durchaus gewünschte Lüfterstellung erreicht, in der die Dachbahn noch in gespanntem Zustand gehalten ist, indem nämlich die Dachspitze (noch) im frontseitigen Bereich des Fahrzeugs verriegelt und das Dachende (noch) gegenüber der Dachspitze in einem konstanten Abstand bleibt. Durch diese Spannung der Dachbahn werden Windgeräusche besonders weitgehend vermieden.

Aber auch bei einer weitergehenden Öffnung, bei der sukzessive nach Entriegelung der Dachspitze die Dachbahn ausgespannt werden kann, führen die sich damit aufgrund der nachlassenden Dachbahnspannung möglicherweise ergebenden Falten in der Dachbahn nicht zu belästigenden Windgeräuschen, weil die Dachbahn insgesamt oder aber zumindest zu einem erheblichen Teil durch die Absenkung des Dachendes unterhalb der Dachöffnung liegen kann.

Jede Führungsbahn ist um einen in Fahrzeugrichtung gesehen in Geschlossenposition vor dem Dachende liegenden Drehpunkt verschwenkbar. Damit kann in bevorzugter konstruktiver Ausgestaltung jede Führungsbahn beispielsweise in einer verschwenkbaren Führungsschiene ausgebildet sein. Die Führungsschiene kann um ein frontseitiges Gelenk um den Winkel verschwenkbar sein, der die gewünschte und angemessene Absenkung der Führungsbahn an ihrem heckseitigen Ende realisiert, z. B. um an der zuvor beschriebenen Übergabestelle genau die notwendige Absenkung zu realisieren, mit der dann die Dachbahn bei der weiteren Öffnungsbewegung aus den heckseitigen Enden der Führungsbahnen in die sich anschließenden seitigen Enden der Führungsbahnen in die sich anschließenden fahrzeugfesten Führungsbahnen übergeleitet werden kann.

In den Unteransprüchen und der anschließenden Zeichnungsbeschreibung finden sich, vorteilhafte Ausgestaltungen und Verbesserungen des im Patentanspruch 1 angegebenen Fahrzeugdachs.

Nach einer konstruktiv bevorzugten Weiterbildung der Erfindung weist jede Führungsbahn ein heckseitiges Ende auf, das in Geschlossenposition der Dachbahn zur Bewegung des Dachendes in die abgesenkte Position in Bezug auf die Dachöffnung nach unten bewegbar ist. Dabei kann die Führungsbahn beispielsweise zumindest im Bereich ihres heckseitigen Endes flexibel ausgebildet sein, so dass sich die die Absenkung des Dachendes bewirkende Absenkbewegung der Dachbahn auf deren heckseitigen Bereich beschränkt.

Um nur Abschnitte der Führungsbahnen bewegen zu müssen, sieht eine vorteilhafte Ausgestaltung der Erfindung vor, dass sich die heckseitigen Enden der Führungsbahnen im Bereich des heckseitigen Randes der Dachöffnung befinden und dass sich dort an einer Übergabestelle jeweils eine fahrzeugseitige feste Führungsbahn anschließt. Damit bleibt der zu bewegende Abschnitt der gesamten Führung der Dachbahn (insbesondere der Führung bis in die endgültige Verstauposition) auf den dachöffnungsnahen Abschnitt beschränkt.

Um eine möglichst vollständige Freigabe des Fahrzeugsdachs zumindest im Bereich der Passagiersitze zu realisieren, besteht häufig der Wunsch, auch die Träger, die die Dachöffnung seitlich umgeben (Seitenholme), vollständig zu entfernen. Dazu sieht eine bevorzugte Fortbildung der Erfindung vor, dass die

Führungsbahnen an Trägern ausgebildet sind, die bei vollständig geöffnetem Dach demontierbar sind, und dass die Führungsbahnen im demontierten Zustand in die Position vorgespannt und/oder in der Position arretiert sind, die sie im montierten Zustand bei abgesenkter Position des Dachendes einnehmen. Dies hat den Vorteil, dass bei Wiedermontage der Träger zum anschließenden Schließen des Fahrzeugdachs aufwandsarm eine Fluchtung fahrzeugseitiger Führungsbahnen mit den Führungsbahnen der Träger gewährleistet ist.

Dazu können die Führungsbahnen z.B. durch Federvorspannung bzw. Federkraft in die gewünschte Position vorgespannt werden. Es ist auch denkbar, die Führungsbahnen nach dem Öffnungsvorgang des Fahrzeugdachs in der gewünschten Position durch federbeaufschlagte Verriegelungselemente zu halten.

In Zusammenhang mit der vorliegenden Erfindung ist der Begriff Dachbahn weit auszulegen; er ist insbesondere nicht beschränkt auf ein aus einer oder mehreren Stoffbahnen bestehendes Faltdach, sondern kann z.B. auch eine aus einer Vielzahl von einzelnen Lamellen zusammengesetzte Dachbahn oder eine aus mehreren breiteren Dachelementen bestehende Dachbahn bezeichnen.

Ein Ausführungsbeispiel der vorliegenden Erfindung wird nachfolgend anhand einer Zeichnung näher erläutert. Es zeigen:
- Fig. 1 - 6: im Längsschnitt verschiedene Phasen während des Übergangs eines vollständig geschlossenen Fahrzeugdachs in eine Position vollständiger Öffnung;
- Fig. 7: einen Ausschnitt aus Fig. 1;
- Fig. 8: eine Führungsbahn.

In den Figuren der Zeichnung bezeichnen gleiche Bezugszeichen gleiche oder funktionsgleiche Komponenten und Elemente, soweit nichts Gegenteiliges angegeben ist.

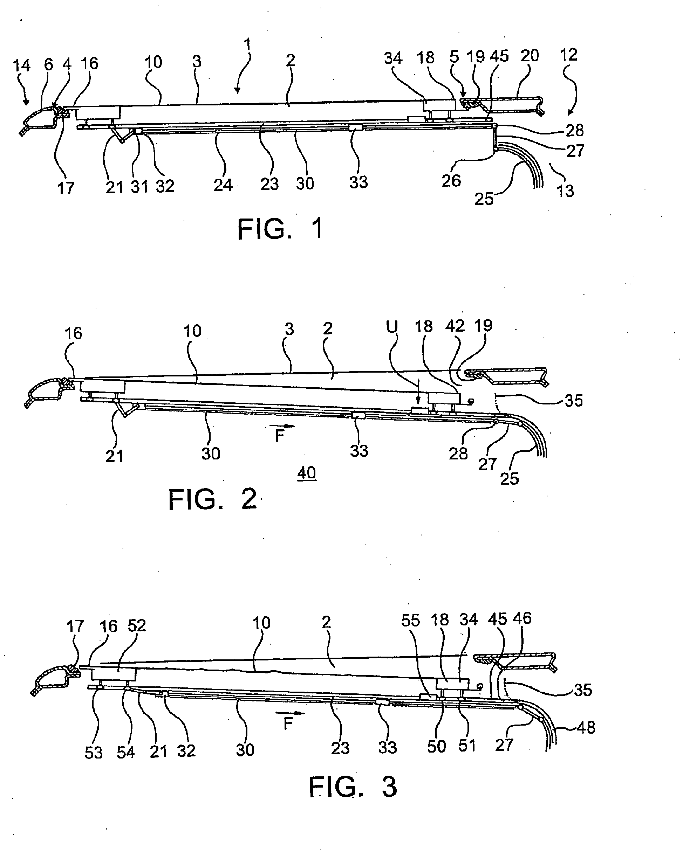

Das in den Fig. 1 bis 6 schematisch dargestellte Fahrzeugdach ist bezüglich der Fahrzeuglängsachse symmetrisch ausgestaltet, so dass sich eine Erläuterung der gegenüberliegenden Seite des Fahrzeugdachs bzw. Fahrzeugs erübrigt.

Fig. 1 zeigt eine Fahrzeugdachanordnung 1 in vollständiger Geschlossenposition. Eine Dachöffnung 2 ist seitlich von Trägern (in Fig. 1 ist aufgrund der Längsschnittdarstellurig nur ein seitlicher Träger 3 andeutungsweise erkennbar) und frontseitig sowie heckseitig von einem Rand 4 bzw. 5 begrenzt. An dem Rand 4 ist ein Windlauf 6 vorgesehen. Die Dachöffnung 2 ist in der in Fig. 1 gezeigten Situation vollständig von einer Dachbahn 10 bedeckt bzw. verschlossen. Die Dachbahn ist ein Stofffaltdach, das - wie nachfolgend noch näher erläutert - in einen im Bereich des Fahrzeughecks 12 vorgesehenen Stauraum 13 teilweise oder vollständig verfahrbar ist. In der Geschlossenposition liegt die Dachbahn 10 mit ihrer zur Fahrzeugfront 14 weisenden und im Wesentlichen parallel zum Rand 4 verlaufenden Dachspitze 16 auf einer Innendichtung 17 auf. Das zum Fahrzeugheck weisende Dachende 18 der Dachbahn 10 ist von unten gegen eine Dichtlippe 19 einer rückwärtigen Dichtung gepresst, die in einem Querträger oder Überrollbügel 20 ausgebildet ist.

Die Dachspitze 16 ist mittels einer nur andeutungsweise dargestellten Kniehebelmechanik gegenüber der Fahrzeugkarosserie verriegelt. Geeignete Verriegelungsmechaniken als solche sind aus dem Kraftfahrzeugkarosseriebau bzw. dem Faltverdeckbau in vielfältiger Weise bekannt und können beispielsweise prinzipiell so aufgebaut sein wie in der DE 102 03 204 A1 beschrieben.

Die verriegelung erfolgt mittels eines Kniehebels 21, über den die Dachspitze 16 bevorzugt in den Seitenträgern (Seitenholmen) 3 verriegelt. Damit werden keine Verriegelungs- oder Spannkräfte in den frontseitigen Bereich der Fahrzeugkarosserie eingeleitet. Außerdem werden damit die Vorteile erzielt, dass die Fahrzeugdachanordnung bzw. die Dachmechanik auch ohne Präsenz der Fahrzeugkarosserie vollständig getestet werden können und dass die Funktion des Fahrzeugdachs von etwaigen karosserieseitigen Toleranzen unabhängig ist.

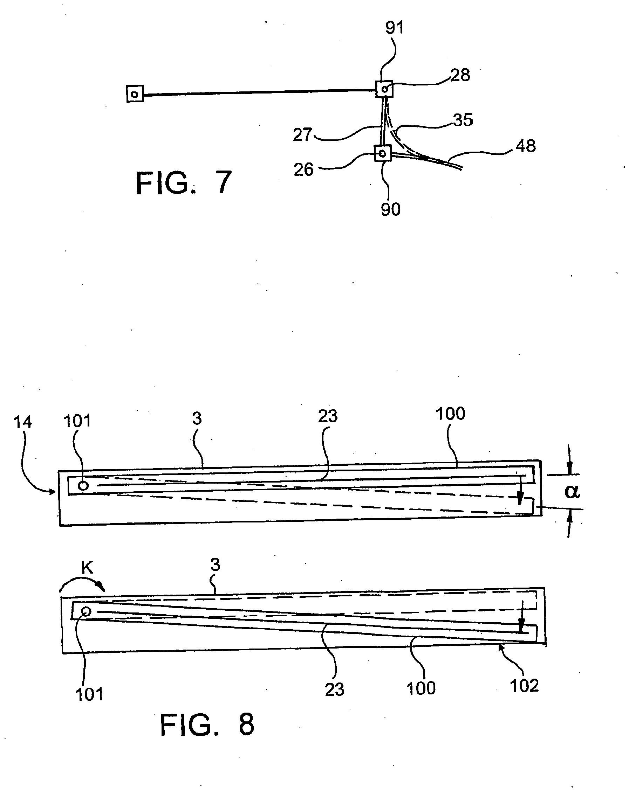

Die Dachbahn 10 ist entlang beiderseits der Dachöffnung 2 verlaufender Führungsbahnen 23 in nachfolgend noch näher beschriebener Weise bewegbar. Zur automatischen Öffnung bzw. zum Schließen der Dachöffnung dient ein drucksteifes Antriebskabel 25, das an einem ersten Anlenkpunkt 26 eines anhand der Fig. 7 noch näher beschriebenen Hebels 27 befestigt ist. An einem weiteren Anlenkpunkt 28 des Hebels ist ein weiteres auch als Distanzkabel bezeichnetes drucksteifes Antriebskabel 30 angelenkt, das bis zu einem Anlenkpunkt 31 des Kniehebels 21 führt. Das Kabel 30 ist in einer Führungsnut 24 in dem Träger 3 unterhalb der Führungsbahn 23 geführt. Mit dem Kabel 30 ist ein vorderer Riegelsteingleiter 32 fest verbunden. Ein zweiter, hinterer Riegelsteingleiter 33 befindet sich außer Eingriff mit einer heckseitigen Riegelwippe 34, die auch als Riegelsteinmitnehmer bezeichnet wird und die fest mit dem dachende 18 verbunden ist.

In der in Fig. 2 gezeigten ersten Phase (Initialöffnung) der Fahrzeugdachbewegung ist die Dachspritze 16 über die Kniehebel 21 noch immer mit den Seitenholmen (z.B. 3) verriegelt. Das Antriebskabel 25 hat auf die Dachbahn 10 bzw. das Distanzkabel 30 eine in Richtung F wirkende Zugkraft ausgeübt, durch die der Hebel 27 aus seiner im Wesentlichen vertikalen Ausrichtung in der Geschlossenposition (Fig. 1) in die in Fig. 2 ersichtliche, annähernd horizontale Ausrichtung verschwenkt ist. Damit hat sich der Anlenkpunkt 28 nach unten entlang einer Führungsbahn 35 bewegt, wie anschließend im Zusammenhang mit Fig. 7 noch detailliert erläutert. Dadurch hat sich das Dachende 18 von der Dachöffnung 2 bzw. der Dichtlippe 19 weg in Pfeilrichtung U nach unten in Richtung auf den Fahrgastinnenraum 40 bewegt. Damit ist zwischen der Dichtlippe 19 bzw. dem Überrollbügel 20 und der Dachbahn 10 ein Öffnungsspalt 42 gebildet, so dass sich eine durchaus gewünschte sogenannte Lüfterstellung ergibt. Hierbei ist ohne horizontale Dachöffnung für einen Luftaustausch zwischen dem Fahrgastinnenraum 40 und der Außenwelt gesorgt, wobei die Dachbahn 10 weiterhin gespannt ist. Diese Spannung resultiert einerseits der noch bestehenden Verriegelung der Dachspitze 16 und aus der Zugspannung des Antriebskabels 25 in Richtung F, wodurch das Dachende zur Dachspitze in einem konstanten Abstand bleibt.

Bei weiterer Bewegung des Antriebskabels 25 bzw. 30 in Richtung F (Fig. 3) bewegt sich der hintere Riegelsteingleiter 33 in Richtung auf das Dachende 18, das mit nur andeutungsweise gezeigten Gleitern 50, 51 in der Führungsbahn 23 geführt ist. Die Dachspitze ist mit einer Riegelwippe 52 fest verbunden, die in der Führungsbahn bewegbare Gleiter 53, 54 aufweist. Durch die Zugkraft des Antriebskabels 25 bzw. des Distanzkabels 30 bewegt sich auch der vordere Riegelsteingleiter 32 zum Fahrzeugheck hin und streckt damit den Kniehebel 21, so dass die Dachspitze entriegelt und sich von der Dichtung 17 löst. Der damit eintretende entspannte Zustand der Dachbahn 10 wird auch als "ausgespannte Dachbahn" bezeichnet. Demgegenüber befindet sich das Dachende noch in über die Riegelwippe 34 verriegelter Position an einem Anschlag 55, so dass bei weiterer Bewegung des Antriebskabels 25 bzw. des vorderen Riegelsteingleiters 32 eine definierte Entspannung eintritt, die in Fig. 3 durch eine leichte Wellung der Dachbahn 10 angedeutet ist. Fig. 3 zeigt dabei die Situation, in der der hintere Riegelgleiter 33 sich kurz vor dem Eingriff mit der Riegelwippe 34 befindet. Der Abstand des vorderen 32 zum hinteren Riegelgleiter 33 ist konstant, weil beide Riegelgleiter fest mit dem Antriebs- bzw. Distanzkabel 30 verbunden sind.

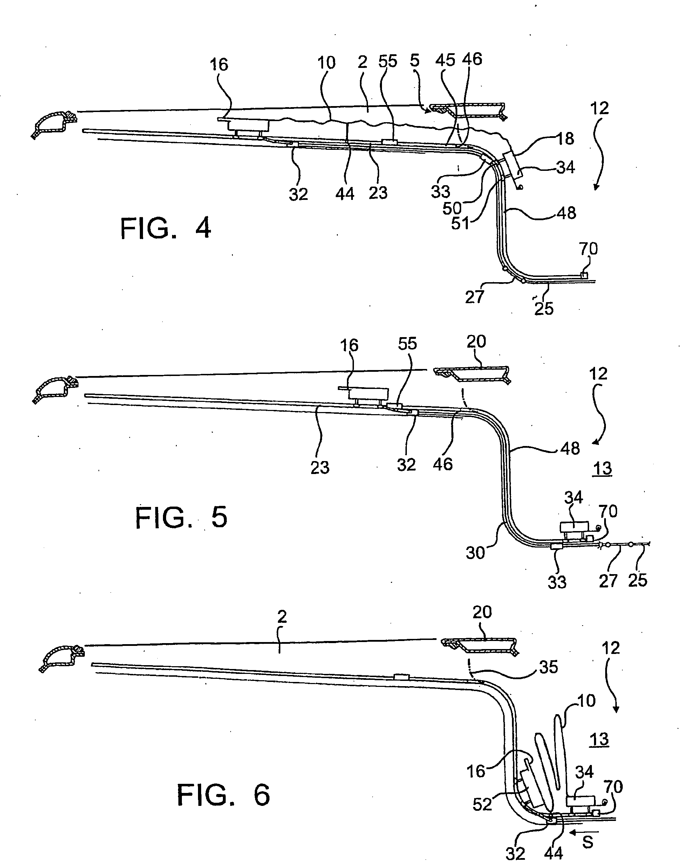

Nachdem der hintere Riegelsteingleiter 33 in die Riegelwippe 34 eingefahren ist und diese aus dem Anschlag bzw. der Verriegelung 55 gelöst hat (Fig. 4), bewegt sich auch das Dachende 18 zum Fahrzeugheck 12 hin. Die Dachbahn 10 entspannt sich dabei weiter und zwar um den Längenbetrag, der durch die Dimension des Kniehebels 21 in gestreckter Position bzw. des Laufwegs des hinteren Riegelsteingleiters 33 bis zum Entriegeln und Mitnehmen der Riegelwippe 34 festgelegt ist. In Fig. 4 ist dementsprechend eine entspannte Kontur der Dachbahn 10 gezeigt, wobei die Dachbahn 10 durch nur andeutungsweise und exemplarisch (44) gezeigte, quer verlaufende Dachspriegel geführt ist, die sich ebenfalls in der Führungsbahn 23 bewegen.

In der in den Fig. 2 ff, gezeigten Position der Führungsbahn 23 fluchtet deren heckseitiges Ende 45 an einer Übergabestelle 46 mit dem offenen Ende einer karosseriefesten weiteren Führungsbahn 48. Die Übergabestelle 46 befindet sich im Bereich des heckseitigen Randes 5 der Dachöffnung 2.

Wie in Fig. 4 gezeigt, bewegt sich das Dachende 18 mittels der Führungsgleiter 50, 51 inzwischen entlang der fahrzeugseitigen Führungsbahn 48, während die Dachspitze 16 entsprechend nachfolgt. Durch den nunmehr konstanten Abstand von Dachspitze 16 zu Dachende 18 ergibt sich auch bei dieser Bewegung und dem Verschieben der Dachbahn 10 eine durch die Dachspriegel zusätzlich gesicherte Hüllkontur, wodurch ein kollisionsfreies Verschieben der Dachbahn in Richtung Fahrzeugheck sichergestellt ist.

In Fig. 5 ist der Zustand gezeigt, in dem die Dachspitze 16 kurz vor dem Verlassen der Führungsbahn 23 steht, um an der Übergangsstelle 46 in die Führungsbahn 48 überzugehen. Zur vereinfachten Darstellung ist in Fig. 5 die Dachbahn 10 nicht gezeigt. Das Dachende 18 hat einen im Fahrzeugheck 12 vorgesehenen Anschlag 70 erreicht. Durch eine an sich bekannte Wippenmechanik ist der hintere Riegelsteingleiter 33 außer Eingriff mit der Riegelwippe 34 gebracht. Der Riegelgleiter 33 bewegt sich somit in Richtung Fahrzeugheck ohne weitere Mitnahme des Dachendes weiter, wenn das Antriebskabel 25 entsprechend weiter gezogen wird.

In dem in Fig. 6 gezeigten Zustand hat auch die Dachspitze 16 ihre Endposition erreicht, in der (gegebenenfalls unterstützt durch andeutungsweise dargestellte Dachspriegel 44) eine raumsparende, kompakte Faltung der Dachbahn realisiert ist. Damit ist die Dachöffnung 2 vollständig freigegeben (vollständige Öffnungsposition). Der frontseitige Riegelsteingleiter 32 kann dann auch außer Eingriff mit der Dachspitze 16 bzw. der vorderen Riegelwippe gebracht sein. Die Dachspriegel 44 können in der Führungsbahn 48 oder in einer vor dem Erreichen der Endposition abzweigenden Führungsbahn geführt sein.

Zum Wieder-Schließen der Dachöffnung 2 wird das Antriebskabel 25 in Pfeilrichtung S bewegt und übt damit auf die Riegelsteingleiter 32, 33 eine Druckkraft aus. Der Schließvorgang erfolgt dabei in gegenüber dem vorbeschriebenen Öffnungsvorgang umgekehrter Reihenfolge, wobei zunächst der Riegelsteingleiter 32 mit der Riegelwippe 52 der Dachspitze 16 verriegelt und die Dachspitze dann in Richtung Fahrzeugfront 14 bewegt. Anschließend entfaltet sich die Dachbahn 10, bis der rückwärtige Riegelsteingleiter 33 in Eingriff mit der Riegelwippe 34 gelangt und dann auch das Dachende bis in die Geschlossenposition zurück verfährt. Zum Ende der Schließbewegung wird dann aufgrund der auf den Gelenkpunkt 26 (Fig. 1) wirkenden Druckkraft der Hebel 27 wieder in die Senkrechte gebracht, wodurch sich das Dachende 18 vertikal nach oben hebt und schließlich wieder in Anlage mit der Dichtlippe 19 gelangt. Das Antriebskabel 25 kann dabei als mit einem Außengewinde versehener, drucksteifer Strang ausgebildet sein, wobei das Außengewinde mit einem Antriebsritzel eines nicht näher dargestellten Antriebsmotors kämmt. Dadurch wird dem Antriebskabel die jeweilige Druck- bzw. Zugbewegung aufgeprägt.

Fig. 7 zeigt zur weiteren Verdeutlichung einen Ausschnitt aus Fig. 1, in dem der Hebel 27 detaillierter dargestellt ist. Der Hebel 27 weist an seinen Gelenkpunkten 26 und 28 Führungsgleiter 90, 91 auf, wobei sich der Führungsgleiter 90 entlang der Führungsbahn 35 bewegt und der Führungsgleiter 91 entlang der Führungsbahn 48. Wie schon erläutert, wird bei Zugbelastung des Antriebskabels nach rechts der Anlenkpunkt 26 entlang der Führungsbahn 48 geführt. Der Hebel 27 rotiert um einen virtuellen Drehpunkt, weil gleichzeitig der Gelenkpunkt 28 entlang (geführt durch den Führungsgleiter 91) entlang der Führungsbahn 35 zwangsläufig nach unten geführt wird. Die Führungsbahn 35 ist in einer räumlich versetzten Ebene gegenüber der Führungsbahn 48 angeordnet.

Fig. 8 zeigt schließlich prinzipiell schematisch eine Ausgestaltungsmöglichkeit einer Führungsbahn 23. Die Führungsbahn 23 ist in einer verschwenkbaren Führungsschiene 100 ausgebildet, die an dem Träger 3 angeordnet sein kann. In der in Fig. 8 oben dargestellten Situation befindet sich die Führungsschiene 100 und damit die Führungsbahn 23 in der Geschlossenposition (vgl. Fig. 1), bei der das Dachende dichtend an der Lippe anliegt. Die Führungsschiene 100 und damit die Führungsbahn 23 ist um einen Drehpunkt 101 um einen Winkel α verschwenkbar. Der Drehpunkt 101 liegt dabei zu dem Dachende beabstandet im Bereich der Fahrzeugfront 14, vorzugsweise am frontseitigen Ende der Führungsbahn 23.

Die in Fig. 8 im unteren Teil gezeigte, verschwenkte Position der Führungsschiene 100 kann eine Vorzugsstellung 102 sein, die z.B. durch eine um den Drehpunkt 101 in Uhrzeigerrichtung wirkende Federkraft K bewirkt wird. Es ist auch möglich, die Vorzugsstellung 102 der Führungsschiene 100 dadurch zu arretieren, dass beispielsweise eine federbeaufschlagte und in dem Träger 3 geführte Kugel in eine entsprechende rückwärtige Ausnehmung der Schiene 100 einrastet. Die Vorspannung in die bzw. eine Arretierung in der Vorzugsstellung 102 ist insbesondere vorteilhaft, wenn der Träger 3 nach vollständiger Öffnung der Dachbahn manuell oder automatisiert entfernt oder verschwenkt werden soll (demontierte Position), um bei einer anschließenden Wiedermontage des Trägers 3 für eine geeignete Vorausrichtung der Führungsbahn 23 in Bezug auf die fahrzeugfesten Führungsbahnen zu sorgen.

### Bezugszeichenliste

- α: Winkel
- F: Richtung
- K: Federkraft
- S: Pfeilrichtung
- U: Pfeilrichtung

- 1: Fahrzeugdachanordnung
- 2: Dachöffnung
- 3: Seitlicher Träger (Seitenholm) / Führungsbahn (S9Z16)
- 4: Rand
- 5: Rand
- 6: Windlauf
- 10: Dachbahn
- 12: Fahrzeugheck
- 13: Stauraum
- 14: Fahrzeugfront
- 16: Dachspitze
- 17: Innenseitige Dichtung
- 18: Dachende
- 19: Dichtlippe
- 20: Überrollbügel
- 21: Kniehebel
- 23: Führungsbahn
- 24: Führungsnut
- 25: Antriebskabel
- 26: Anlenkpunkt
- 27: Hebel
- 28: Anlenkpunkt
- 30: Kabel (Distanzkabel)
- 31: Anlenkpunk
- 32: Vorderer Riegelsteingleiter
- 33: Hinterer Riegelsteingleiter
- 34: Riegelwippe
- 35: Führungsbahn
- 40: Fahrgastinnenraum
- 42: Öffnungsspalt
- 44: Dachspriegel
- 45: Heckseitiges Ende der Führungsbahn 23
- 46: Übergabestelle
- 48: Karosseriefeste Führungsbahn
- 50: Gleiter
- 51: Gleiter
- 52: Riegelwippe
- 53: Gleiter
- 54: Gleiter
- 55: Anschlag
- 70: Anschlag
- 90: Führungsgleiter
- 91.: Führungsgleiter
- 100: Verschwenkbare Führungsschiene
- 101: Drehpunkt
- 102: Vorzugsstellung

## Patentansprüche

1. Fahrzeugdach mit einer Dachöffnung (2) und mit einer Dachbahn (10) mit einer zur Fahrzeugfront (14) weisenden Dachspitze (16) und einem zum Fahrzeugheck (12) weisenden Dachende (18), die entlang beiderseits der Dachöffnung (2) verlaufender Führungsbahnen (23) aus einer die Dachöffnung (2) verschließenden Geschlossenposition in eine die Dachöffnung (2) zumindest teilweise freigebende Öffnungsposition bewegbar ist, wobei die Öffnungsbewegung aus der Geschlossenposition der Dachbahn (10) mit einer Bewegung des Dachendes (18) in eine abgesenkte Position unterhalb der Dachöffnung(2)beginnt, **dadurch gekennzeichnet,**
**dass** jede Führungsbahn (23) um einen in Fahrzeugrichtung gesehen in Geschlossenposition vor dem Dachende (18) liegenden Drehpunkt (101) verschwenkbar ist.

2. Fahrzeugdach nach Anspruch 1,
**dadurch gekennzeichnet,**
**dass** jede Führungsbahn (23) ein heckseitiges Ende (45) aufweist, das in Geschlossenposition der Dachbahn (10) zur Bewegung des Dachendes (18) in die abgesenkte Position in Bezug auf die Dachöffnung (2) nach unten bewegbar ist.

3. Fahrzeugdach nach Anspruch 2,
**dadurch gekennzeichnet,**
**dass** sich die heckseitigen Enden (45) der Führungsbahnen (23) im Bereich des heckseitigen Randes der Dachöffnung (2) befinden und dass sich dort an einer Übergabestelle (46) jeweils eine fahrzeugfeste Führungsbahn (48) anschließt.

4. Fahrzeugdach nach Anspruch 1,
**dadurch gekennzeichnet,**
**dass** jede Führungsbahn (23) in einer verschwenkbaren Führungsschiene (100) ausgebildet ist.

5. Fahrzeugdach nach einem der Ansprüche 1- 4 , **dadurch gekennzeichnet,**
**dass** die Führungsbahnen (23) an Trägern (3) ausgebildet sind, die bei vollständig geöffnetem Dach demontierbar sind, und dass die Führungsbahnen (23) im demontierten Zustand in die Position (102) vorgespannt und/oder in der Position (102) arretiert sind, die sie im montierten Zustand bei abgesenkter Position des Dachendes einnehmen.

6. Fahrzeugdach nach Anspruch 5,
**dadurch gekennzeichnet,**
**dass** die Führungsbahnen (23) durch Federkraft (K) in die Position (102) vorgespannt sind.

7. Fahrzeugdach nach Anspruch 5,
**dadurch gekennzeichnet,**
**dass** die Führungsbahnen (23) in der Position (102) durch federbeaufschlagte Verriegelungselemente gehalten sind.

8. Fahrzeugdach nach einem der vorangehenden Ansprüche,
**dadurch gekennzeichnet,**
**dass** die Dachbahn (10) als Faltdach ausgebildet ist, welches zumindest teilweise in einen im Fahrzeugheck (12) vorgesehenen Stauraum (13) einfahrbar ist.

## Claims

1. Vehicle roof with a roof opening (2) and with a roof covering (10) having a roof tip (16) pointing to the front (14) of the vehicle and a roof end (18) pointing to the rear (12) of the vehicle, said roof covering being movable along guide tracks (23), which run on both sides of the roof opening (2), from a closed position closing the roof opening (2) into an open position at least partially opening up the roof opening (2), wherein the opening movement from the closed position of the roof covering (10) begins with a movement of the roof end (18) into a lowered position below the roof opening (2), **characterized in that** each guide track (23) is pivotable about a pivot point (101) which, in the closed position, is situated in front of the roof end (18), as seen in the direction of the vehicle.

2. Vehicle roof according to Claim 1, **characterized in that** each guide track (23) has a rear end (45) which, in the closed position of the roof covering (10), is movable downward for the movement of the roof end (18) into the lowered position with respect to the roof opening (2).

3. Vehicle roof according to Claim 2, **characterized in that** the rear ends (45) of the guide tracks (23) are located in the region of the rear border of the roof opening (2), and **in that** a respective guide track (48) mounted on the vehicle adjoins a transfer point (46) there.

4. Vehicle roof according to Claim 1, **characterized in that** each guide track (23) is formed in a pivotable guide rail (100).

5. Vehicle roof according to one of Claims 1-4, **characterized in that** the guide tracks (23) are formed on supports (3) which are removable when the roof is fully open, and **in that**, in the removed state, the guide tracks (23) are prestressed into the position (102) and/or locked in the position (102) which they take up in the fitted state in the lowered position of the roof end.

6. Vehicle roof according to Claim 5, **characterized in that** the guide tracks (23) are prestressed into the position (102) by means of spring force (K).

7. Vehicle roof according to Claim 5, **characterized in that** the guide tracks (23) are held in the position (102) by means of spring-loaded locking elements.

8. Vehicle roof according to one of the preceding claims, **characterized in that** the roof covering (10) is designed as a folding roof which can be at least partially retracted into a storage compartment (13) provided in the rear (12) of the vehicle.

## Revendications

1. Toit de véhicule, comprenant une ouverture de toit (2) et une bande de toit (10) dotée d'une pointe de toit (16) tournée vers l'avant du véhicule (14) et d'une extrémité de toit (18) tournée vers l'arrière du véhicule (12), laquelle bande de toit peut être déplacée, le long de pistes de guidage (23) s'étendant de part et d'autre de l'ouverture de toit (2), à partir d'une position fermée qui ferme l'ouverture de toit (2) jusqu'à une position d'ouverture qui libère au moins en partie l'ouverture de toit (2), le déplacement d'ouverture à partir de la position fermée de la bande de toit (10) commençant par un déplacement de l'extrémité de toit (18) dans une position abaissée en dessous de l'ouverture de toit (2), **caractérisé en ce que** chaque piste de guidage (23) peut être pivotée autour d'un pivot (101) qui se situe, vu dans la direction du véhicule, devant l'extrémité de toit (18) dans la position fermée.

2. Toit de véhicule selon la revendication 1,
**caractérisé en ce que**
chaque piste de guidage (23) comprend une extrémité arrière (45) qui, dans la position fermée de la bande de toit (10), peut être déplacée vers le bas en vue du déplacement de l'extrémité de toit (18) dans la position abaissée par rapport à l'ouverture de toit (2).

3. Toit de véhicule selon la revendication 2,
**caractérisé en ce que**
les extrémités arrière (45) des pistes de guidage (23) se trouvent dans la région du bord arrière de l'ouverture de toit (2), et **en ce qu'**une piste de guidage (48) fixée au véhicule s'y raccorde à chaque fois en un point de transfert (46).

4. Toit de véhicule selon la revendication 1,
**caractérisé en ce que**
chaque piste de guidage (23) est réalisée dans un rail de guidage (100) qui peut être pivoté.

5. Toit de véhicule selon l'une quelconque des revendications 1 à 4,
**caractérisé en ce que**
les pistes de guidage (23) sont réalisées sur des supports (3) qui peuvent être démontés lorsque le toit est complètement ouvert, et **en ce que** les pistes de guidage (23), dans l'état démonté, sont précontraintes dans la position (102) et/ou sont bloquées dans la position (102) qu'elles adoptent dans l'état monté dans la position abaissée de l'extrémité de toit.

6. Toit de véhicule selon la revendication 5,
**caractérisé en ce que**
les pistes de guidage (23) sont précontraintes dans la position (102) au moyen d'une force de ressort (K).

7. Toit de véhicule selon la revendication 5,
**caractérisé en ce que**
les pistes de guidage (23) sont maintenues dans la position (102) au moyen d'éléments de verrouillage sollicités par ressort.

8. Toit de véhicule selon l'une quelconque des revendications précédentes,
**caractérisé en ce que**
la bande de toit (10) est réalisée sous forme de toit pliant, lequel peut être rentré au moins en partie dans un espace de rangement (13) prévu dans l'arrière du véhicule (12).
